# EUROPEAN PATENT APPLICATION

(11) **EP 4 595 767 A1**
(43) Date of publication of application: **06.08.2025**
(21) Application number: 24155519.2
(22) Date of filing: 02.02.2024
(51) Int. Cl.: A23G 9/04, A23G 9/32, A23G 9/34, A23G 9/42, A23L 2/385, A23L 2/56, A23L 2/60, C12G 3/00, C12G 3/04

(54) **CONCENTRATE FOR DRINKS**

(71) Applicant: Melt Corp Licensing ApS, 2920 Charlottenlund (DK)
(72) Inventor: Silveira, Serge, 2820 Charlottenlund (DK)
(74) Representative: Dragsted Partners A/S

(57) **Abstract**

An aqueous concentrate to be diluted into a drink. The concentrate, apart from water, comprising a flavouring, a sweetener, a polysaccharide and an emulsifying agent.

## Description

### FIELD OF THE INVENTION

The present invention relates to an aqueous concentrate to be diluted into a drink. Typically, such an aqueous concentrate is provided in frozen form. Further, it relates to the use of the aqueous concentrate in providing a drink.

### BACKGROUND

Drinks and cocktails are generally aqueous compositions comprising alcohol, i.e. ethanol, flavourings and typically sugar in some form. They could be seen as beverages with a base liquor, like vodka or gin, mixed with other flavoured ingredients. The flavourings may be fruit juice or juice pulp. Further, liqueur, i.e. a sweet alcoholic drink composed of spirits (often rectified spirit) and additional flavourings, such as sugar, fruits, herbs and spices, may add flavour to the drink. Furthermore, the liquor itself, such as rum, tequila, whisky etc., adds flavours to the drinks. Typically, drinks and cocktails are served cooled by adding ice and/or shaking or stirring them with ice before serving them.

In order to provide an alternative to drinks and cocktails blended on demand in a bar by a professional bartender, frozen ready-made alternatives have emerged on the market. Thus, frozen alcoholic drinks and cocktails are today available, whereas frozen non-alcoholics drinks and cocktails are scarce or non-abundant. Before consumption, the frozen drink or cocktail is put into a glass to melt, thereby providing a liquid drink or cocktail.

Today's existing frozen ready-made drinks and cocktails suffer from some shortcomings. One of the major issues is that it takes quite some time for them to melt in order to provide a drink for consumption. Especially in professional bars and at major events where there is a need to provide several drinks and cocktails rapidly, this may be a problem. Further, even at home it would be desired to provide frozen drinks and cocktails melting rapidly for spontaneous consumption.

Further, there is an increasing demand for non-alcoholic alternatives, also for high-end drinks and cocktails. In addition, there is a desire for high-end, ready-made drinks and cocktails, be it alcoholic or non-alcoholic, similar to drinks and cocktails comprising, *inter alia,* fresh fruit. Existing products are typically artificial, the taste for a given type of drink being distinct from a corresponding drink served by a professional bartender.

Thus, there is a need for a frozen ready-made drink or a concentrate to provide a drink addressing these needs.

### Summary

Consequently, the present invention seeks to mitigate, alleviate, eliminate or circumvent one or more of the above-identified deficiencies and disadvantages in the art singly, or in any combination, by providing an aqueous concentrate to be diluted into a drink.

According to an aspect, there is thus provided an aqueous concentrate to be diluted into a drink. The concentrate apart from water comprises:
- a flavouring;
- 20 to 60 wt.% of a sweetener;
- 1 to 5 wt.% of a polysaccharide; and
- 0.05 to 0.5 wt.% of an emulsifying agent.

It has been found that by combining a sweetener, such as glucose or sorbitol, with a polysaccharide and an emulsifying agent, the melting rate of the aqueous concentrate in frozen form is significantly increased. The addition of sweetener *per se* is not sufficient to provide the desired melting rate. Further, high proportions of a sweetener may result in a too sweet drink. The major effect of the sweetener is freezing point depression.

The emulsifying agent has another effect. By adding an emulsifying agent, the aqueous concentrate may have an overrun, i.e. it may comprise gas bubbles, such as air bubbles. The presence of gas bubbles in the aqueous concentrate in frozen form was found to increase the melting rate. Further, also the addition of a polysaccharide was found advantageous; the polysaccharide may, *inter alia,* stabilize an overrun. The aqueous concentrate may comprise 30 to 70 wt.% water.

As it is preferred to allow for the use of the aqueous concentrate not only to provide alcoholic drinks but also non-alcoholic versions thereof, the aqueous concentrate according to an embodiment comprises less than 1.0 wt.% ethanol, such as less than 0.50 wt.% ethanol. Ready-made drinks, but also drink concentrates, in the art are typically alcoholic, i.e. they comprise a substantial amount of ethanol. Due to the high content of ethanol lowering the melting point, they tend to melt quite rapidly. However, if ethanol is absent, their melting rate is substantially decreased.

The concentrate apart from water comprises 20 to 60 wt.% of the sweetener. Whereas a higher content of the sweetener provides a higher melting rate, it also increases the sweetness of the drink. It may be preferred if the concentrate, apart from water, comprises 30 to 45 wt.% of the sweetener According to an embodiment, the sweetener is a sugar or a sugar alcohol. The sweetener may be selected from one or several species in the group consisting of glucose, fructose, galactose, sorbitol, xylitol, maltitol, sucrose, lactose and maltose. Preferably, the sweetener is selected from one or several species in the group consisting of glucose, fructose, sorbitol, xylitol and sucrose. More preferably, the sweetener is glucose or glucose syrup. Whereas sorbitol may be preferred in some contexts due to its lower caloric content (it is used in diet foods in the art), its sweetness may be perceived as less natural compared to glucose. According to an alternative embodiment, the sweetener is sorbitol. Glucose is a more effective freezing point depressant than sucrose due to its lower molecular weight. Hence, glucose is preferred over sucrose, though both are natural sweeteners.

Further, the polysaccharide may be a dietary fiber. Typically, the dietary fiber is a dietary fiber in the form of a non-starch polysaccharide. Preferably, the polysaccharide is a fructan, such as inulin. The polysaccharide, such as inulin, is beneficial to include in the aqueous concentrate due to its ability to act as a thickening and volumizing agent. Further, it is believed that it reduces the formation of ice crystals. It is used to favour the insertion of air and to reduce the hardness of the frozen aqueous concentrate.

In order to allow for the provision of gas bubbles in the frozen aqueous concentrate, the concentrate comprises an emulsifying agent. The emulsifying agent may be selected from the group consisting of mono-glycerides, di-glycerides, or a mixture thereof, propane-1,2-diol esters of fatty acids (E 477), xanthan gum, soy lecithin, albumen, serum proteins and citrus fiber. Preferably, the emulsifying agent is a mixture of mono-glycerides and di-glycerides. Thus, the emulsifying agent may be an agent with the E number 471.

Optionally, the aqueous concentrate may comprise a modified resistant starch, such as hydroxypropyl distarch phosphate, or a gum, such as xanthan gum, gum arabic, tragacanth, guar gum, karaya gum, tara gum, gellan gum and gum ghatti. Thus, the aqueous concentrate may comprise 0.05 to 0.4 wt.% of a modified resistant starch or a gum. According to an embodiment, the aqueous concentrate comprises hydroxypropyl distarch phosphate. Apart from acting as a supplementary emulsifier, it may act as a stabilizer and thickener, imparting more viscosity to the product and modifying the consistency of the product.

Thickening agents like inulin and hydroxypropyl distarch phosphate may provide for better spherification in freezing the aqueous concentrate using liquid nitrogen. Further, thickening agents like inulin and hydroxypropyl distarch phosphate may improve the stability of the overrun, which in turn may increase the melting rate due to a high proportion of small gas bubbles.

In order to provide an aqueous concentrate to be diluted into a drink, the concentrate comprises a flavouring. Typically, the flavouring comprises fruit juice and/or fruit pulp, as a high-end drink is to be provided. Various juices and/or pulps may be used, such as juice and/or pulp from lime, strawberry, lemon, lychee, blueberry, banana, cranberry, raspberry, pineapple, coconut, mango, pear, apple, melon and orange.

According to an embodiment, the aqueous concentrate comprises acidic regulators are food additives used to change or maintain pH (acidity or basicity). They can be organic or mineral acids, bases, neutralizing agents, or buffering agents. Typical examples of acidic regulator acids are sorbic acid, acetic acid, benzoic acid, phosphoric acid and propionic acid, and their sodium salts. If to maintain the pH, the acidic regulator may be added as a conjugate acid-base pair, e.g. sorbic acid/sodium sorbate, acetic acid/sodium acetate, H₃PO₄/NaH₂PO₄ and NaH₂PO₄/Na₂HPO₄, acting as a buffer.

According to an embodiment, the aqueous concentrate comprises an acidulant, i.e. a chemical compound that may give a tart, sour and/or acidic flavour to the drink, or enhance the perceived sweetness of the drink. According to an embodiment, the acidulant is selected from the group consisting of acetic acid, ascorbic acid, citric acid, fumaric acid, lactic acid, malic acid, phosphoric acid and tartaric acid. Acetic acid gives vinegar its sour taste and distinctive smell; ascorbic acid (vitamin C) is found in e.g. oranges and gives a crisp, slightly sour taste; citric acid is found in citrus fruits and gives them their sour taste; fumaric acid is found in e.g. bolete mushrooms, Icelandic moss and lichen and is used as a substitute for citric and tartaric acid and enhances flavour and sourness; lactic acid is found in fermented products and gives them a rich tartness; malic acid is found in apples and rhubarb and provides a sour/tart taste; phosphoric acid is used in e.g. sodas like cola drinks to give them an acidic taste; and tartaric acid is found in grapes and wines and gives them a tart taste.

According to an embodiment, the aqueous concentrate comprises a food acid. Food acids may be added to make flavours "sharper". Further, they may act as preservatives and antioxidants. According to an embodiment, the food acids are selected from the group consisting of vinegar, citric acid, tartaric acid, malic acid, folic acid, fumaric acid and lactic acid.

According to an embodiment, the aqueous concentrate is present in frozen form. By providing it in frozen form, it is ready to be used, i.e. to be mixed with e.g. an alcoholic beverage to provide a drink. Further, the frozen aqueous concentrate typically comprises gas bubbles, such as air bubbles. A frozen aqueous concentrate comprising gas bubbles has an overrun. The overrun may be 10 to 30%, or 15 to 25%. A frozen aqueous concentrate comprising gas bubbles was found to have a higher melting rate. The frozen aqueous concentrate may be obtained by freezing aqueous concentrate. Typically, it is mixed with air before being frozen to provide an overrun. According to an embodiment, the frozen aqueous concentrate is obtainable by freezing the aqueous concentrate by using liquid nitrogen, such as by adding liquid nitrogen to the aqueous concentrate or by contacting a mould comprising the aqueous concentrate with liquid nitrogen. Such rapid freezing will provide a frozen aqueous concentrate with a higher melting rate. Further, adding liquid nitrogen to the aqueous concentrate, preferably combined by mixing, may provide the frozen aqueous concentrate with an overrun, as nitrogen bubbles and optionally air bubbles are incorporated into the aqueous concentrate. According to an embodiment, the frozen aqueous concentrate is present as a monolithic solid. In order to increase the melting rate, the 3-dimensional shape of the monolithic solid may be such that the surface-area-to-volume ratio for a unit volume of the shape is larger than 6.0, such as larger than 6.2. The surface-area-to-volume ratio for a unit volume of a cube is 6, whereas it is 4.8 for a sphere. The monolithic solid may comprise a mixture of pieces of ice and pieces of frozen aqueous concentrate. The frozen aqueous concentrate will melt more rapidly than the ice. By incorporating pieces of ice into the frozen aqueous concentrate, the need to add ice to a drink may be dispensed with. Even if present as a monolithic solid, the frozen aqueous concentrate may comprise gas bubbles.

According to an embodiment, the frozen aqueous concentrate is present as a granular mass. A granular mass is less compact than a monolithic solid. The granular mass comprises a mixture of granules of ice and granules of frozen aqueous concentrate. By incorporating granules of ice into the frozen aqueous concentrate, the need to add ice to a drink may be dispensed with. The granules of frozen aqueous concentrate may comprise gas bubbles. The granules of ice may or may not comprise gas bubbles.

According to another aspect, there is provided for the use of the present aqueous concentrate in providing a drink. In such use, the present aqueous concentrate may be added to an aqueous liquid, such as an alcoholic liquid, to provide a drink. Alternatively, an aqueous liquid, such as an alcoholic liquid, may be added to the present aqueous concentrate to provide a drink. The alcoholic liquid may be a base liquor, like vodka, gin, rum, tequila, whisky, cognac, brandy or pomace spirit (e.g. grappa or marc). Generally, it is sufficient to use a base liquor apart from the present aqueous concentrate. However, in some embodiments further ingredients, like liqueur, may be added.

According to another aspect, there is provided a method of providing a drink. The method comprises the step of adding an aqueous liquid to the present aqueous concentrate, or the step of adding the present aqueous concentrate to an aqueous liquid. The aqueous liquid may be an alcoholic liquid. Further, it may be a non-alcoholic liquid. The alcoholic liquid may be a base liquor, like vodka, gin, rum, tequila, whisky, cognac, brandy or pomace spirit (e.g. grappa or marc). Typically, the aqueous liquid and the aqueous concentrate are added to a glass to serve the drink in.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims, and other embodiments than the specific embodiments above are equally possible within the scope of these appended claims, e.g. different than those described above.

In the claims, the term "comprises/comprising" does not exclude the presence of other elements or steps. Additionally, although individual features may be included in different claims, they may possibly advantageously be combined, and the inclusion in different claims does not imply that a combination of features is not feasible and/or advantageous.

In addition, singular references do not exclude a plurality. The terms "a", "an", "first", "second", etc., do not preclude a plurality.

### EXPERIMENTAL

The following examples are mere examples and should by no means be interpreted to limit the scope of the invention. Rather, the invention is limited only by the accompanying claims.

### Example 1 - comparison of melting rate

A number of frozen compositions were provided by putting water in a pendulum and heating it. When the water has reached the temperature 100 degrees, all the ingredients that form the melt mixture are added: dextrose (20 wt.%), inulin (5 wt.%), E471 (0.5 wt.%) and E1442 (0.4 wt.%). Care must be taken at this stage because a homogenizer must be used to promote the solubilization of all the ingredients. Next, the solution must be cooled by placing the solution in a refrigerator or ice bath. When the solution has cooled down to a temperature of about 15 degrees, it is brought back to volume with more water to compensate for the loss of water due to the boiling phase. Finally, the 50 ml molds are filled and stored in the freezer at -23 degrees for 24 hours.

The melting process of the cocktail was monitored by measuring experimentally in grams of product in the semi-solid liquid phase at a temperature of 20°C (+-0.1°C). The initial 50 ml of sample were weighed and placed in a 150 ml Baker. Then 20 ml of 40% alcohol were added and stirred for 180 seconds. The mixing aids that were used were a magnetic stirrer or a teaspoon or a mixer or a straw. Finally, the cocktail was filtered through a 3.4 mm wire mesh to separate the liquid phase from the solid phase. Below, the degree of melting (weight reduction of the solid) after 180 seconds is shown in **Table 1.**

**Table 1 - Degree of melting**

| **Sample** | **Degree of melting after 180 sec.** |
|---|---|
| Water | 17% |
| Example 1 | 39% |
| Example 1 without dextrose | 22% |
| Example 1 without inulin | 29% |
| Example 1 without E471 | 28% |
| Example 1 without E1442 | 38% |

As expected, the addition of dextrose increased the melting rate. It was, however, also found that the melting rate could be further increased by additional additives. As can be seen in **Table 1,** the addition of inulin as well as E471 significantly affected the melting rate, whereas the effect of E1442 was moderate. Given that the addition of dextrose also sweetens the extract, it is advantageous to provide an extract with moderate sweetness, still having a sufficient melting rate.

### Example 2 - Ingredients for a 50 ml cocktail concentrate

Various examples of drink concentrates according to the present invention are disclosed below. In short, the concentrates may be provided by:
a) Preparation of melt solution: ingredients and quantities are specified in the recipe below. This is done by putting water in a pendulum and heating it. When the water has reached the temperature 100 degrees, all the ingredients that form the melt mixture are added: sugars, inulin, E471 and E1442. Care must be taken at this stage because a homogenizer must be used to promote the solubilization of all the ingredients. Next, the solution must be cooled by placing the solution in a refrigerator or ice bath. When the solution has cooled down to a temperature of about 15 degrees, it is brought back to volume with more water to compensate for the loss of water due to the boiling phase.
b) During the cooling phase of the melt mixture, step b is proceeded with; it consists of extracting fruit juices. Depending on the type of cocktail, different fruits will need to be used. In a general way, the steps of this phase are: you start by cleaning the fruit, then the non-edible parts of the fruit are removed and cut into pieces. Once this point is reached, all the pieces are blended using a blender or citrus juicer. At the end of this stage, you filter the solution using a wire mesh to remove the solid residue from the fruit.
c) At this stage, the melt solution is combined with the juices to promote mixing, using a homogenizer. Finally, the 50 ml molds are filled and stored in the freezer at -23 degrees for 24 hours; the solution is put into the 50 ml molds.

Upon use, the frozen concentrate is put into a glass and liquor (or a non-alcoholic substitute) is added. Within few minutes, a cold liquid drink is at hand.

### INGREDIENTS - Mojito

| *Based on Neosorbitol* | |
|---|---|
| Water: | 35 ml |
| Lime: | 15 ml |
| Neosorbitol: | 17.5 g (35%) or 25 g (50%) |
| Inulin: | 2.5 g (5%) |
| E471: | 0.25 g (0.5%) |
| E1442: | 0.20 g (0.4%) |
| Rum: | 20 ml (to be added before consumption) |

### Based on glucose

| | |
|---|---|
| Water: | 35 ml |
| Lime: | 15 ml |
| Glucose: | 17.5 g (35%) or 25 g (50%) |
| Inulin: | 2.5 g (5%) |
| E471: | 0.25 g (0.5%) |
| E1442: | 0.20 g (0.4%) |
| Rum: | 20 ml (to be added before consumption) |

**Melting rate:** 56% (20% Neosorbitol), 92% (50% Neosorbitol), 44% (20% glucose), 83% (50% glucose)

Seemingly, 35% of the sweetener provides a sufficient melting rate without providing a too sweet drink.

### INGREDIENTS - Liquorish Jewel

| | |
|---|---|
| Water: | 25 ml |
| Strawberry: | 15 ml |
| Lemon: | 10 ml |
| Neosorbitol: | 17.5 g (35%) or 25 g (50%) |
| Honey: | 0.5 g |
| Inulin: | 2.5 g (5%) |
| E471: | 0.25 g (0.5%) |
| E1442: | 0.20 g (0.4%) |
| Vodka: | 20 ml (to be added before consumption) |

As for Mojito, glucose may be used instead of sorbitol.

### INGREDIENTS - Blueberry Bitch

| | |
|---|---|
| Water: | 25 ml |
| Lychee: | 15 ml |
| Lemon: | 10 ml |
| Neosorbitol: | 17.5 g (35%) or 25g (50%) |
| Blueberry: | 7.5g |
| Inulin: | 2.5 g (5%) |
| E471: | 0.25 g (0.5%) |
| E1442: | 0.20 g (0.4%) |
| Vodka: | 20 ml (to be added before consumption) |

As for Mojito, glucose may be used instead of sorbitol.

### INGREDIENTS - Cosmopolitan

| | |
|---|---|
| Water: | 25 ml |
| Cranberry: | 10 ml |
| Lime: | 10 ml |
| Orange: | 5 ml |
| Neosorbitol: | 17.5 g (35%) or 25g (50%) |
| Blueberry: | 7.5 g |
| Inulin: | 2.5 g (5%) |
| E471: | 0.25 g (0.5%) |
| E1442: | 0.20 g (0.4%) |
| Vodka: | 20 ml (to be added before consumption) |

As for Mojito, glucose may be used instead of sorbitol.

### INGREDIENTS - Piña Colada

| | |
|---|---|
| Pineapple: | 30 ml |
| Water: | 15 ml |
| Coconut milk: | 5 ml |
| Neosorbitol: | 17.5 g (35%) |
| Inulin: | 2.5 g (5%) |
| E471: | 0.25 g (0.5%) |
| E1442: | 0.20 g (0.4%) |
| Rum: | 20 ml (to be added before consumption) |

As for Mojito, glucose may be used instead of sorbitol.

## Claims

1. An aqueous concentrate to be diluted into a drink, wherein the concentrate apart from water comprises:
- a flavouring;
- 20 to 60 wt.% of a sweetener;
- 1 to 5 wt.% of a polysaccharide; and
- 0.05 to 0.5 wt.% of an emulsifying agent.

2. The aqueous concentrate according to claim 1, wherein the aqueous concentrate is present in frozen form.

3. The aqueous concentrate according to claim 2, wherein the frozen aqueous concentrate comprises gas bubbles, such as air bubbles, thereby having an overrun, such as an overrun of 10 to 30% or 15 to 25%.

4. The aqueous concentrate according to any one of the claims 2 and 3, wherein the frozen aqueous concentrate is a monolithic solid; preferably the 3-dimensional shape of the monolithic solid is such that the surface-area-to-volume ratio for a unit volume of the shape is larger than 6.0, such as larger than 6.2.

5. The aqueous concentrate according to any one of the claims 2 and 3, wherein the frozen aqueous concentrate is present as a granular mass.

6. The aqueous concentrate according to claim 4, wherein the solid comprises a mixture of pieces of ice and pieces of frozen aqueous concentrate, or the aqueous concentrate according to claim 5, wherein the granular mass comprises a mixture of granules of ice and granules of frozen aqueous concentrate.

7. The aqueous concentrate according to any one of the claims 2 to 6, wherein the frozen aqueous concentrate is obtainable by freezing the aqueous concentrate by using liquid nitrogen, such as by adding liquid nitrogen to the aqueous concentrate or by contacting a mould comprising the aqueous concentrate with liquid nitrogen.

8. The aqueous concentrate according to any one of the claims 1 and 8, wherein the aqueous concentrate comprises less than 1.0 wt.% ethanol, such as less than 0.50 wt.% ethanol, and/or wherein the aqueous concentrate comprises 30 to 70 wt.% water.

9. The aqueous concentrate according to any one of the claims 1 and 8, wherein the sweetener is a sugar or a sugar alcohol; preferably the sweetener is selected from one or several species in the group consisting of glucose, fructose, galactose, sorbitol, xylitol, maltitol, sucrose, lactose and maltose, preferably from one or several species in the group consisting of glucose, fructose, sorbitol, xylitol and sucrose; more preferably the sweetener is glucose or glucose syrup.

10. The aqueous concentrate according to any one of the claims 1 and 9,
wherein the polysaccharide is a dietary fiber in the form of a non-starch polysaccharide; preferably the polysaccharide is a fructan, such as inulin.

11. The aqueous concentrate according to any one of the claims 1 and 10,
wherein the emulsifying agent is selected from the group consisting of a monoglyceride, a di-glyceride, or a mixture thereof, propane-1,2-diol esters of fatty acids (E 477), xanthan gum, soy lecithin, albumen, serum proteins and citrus fiber; preferably the emulsifying agent is a mixture of mono-glycerides and di-glycerides.

12. The aqueous concentrate according to any one of the claims 1 and 11,
wherein the aqueous concentrate comprises 0.05 to 0.4 wt.% of a modified resistant starch, such as hydroxypropyl distarch phosphate, or a gum, such as xanthan gum, gum arabic, tragacanth, guar gum, karaya gum, tara gum, gellan gum, or gum ghatti.

13. The aqueous concentrate according to any one of the claims 1 and 12,
wherein the flavoring comprises fruit juice and/or fruit pulp, and/or wherein the aqueous concentrate comprises an acidic regulator and/or an acidulant and/or a food acid.

14. Use of the aqueous concentrate according to any one of the claims 1 and 13 in providing a drink.

15. A method of providing a drink, wherein the method comprises the step of adding an aqueous liquid to the aqueous concentrate according to any one of the claims 1 and 13, or the step of adding the aqueous concentrate according to any one of the claims 1 and 13 to an aqueous liquid, optionally the aqueous liquid being an alcoholic liquid; preferably the aqueous liquid and the aqueous concentrate according to any one of the claims 1 and 13 are added to a glass.
